# EUROPEAN PATENT APPLICATION

(11) **EP 4 471 282 A1**
(43) Date of publication of application: **04.12.2024**
(21) Application number: 22922087.6
(22) Date of filing: 30.11.2022
(51) Int. Cl.: F16C 3/08, C21D 1/10, C21D 9/30, C22C 38/00, C22C 38/60

(54) **CRANKSHAFT AND MANUFACTURING METHOD THEREFOR**

(30) Priority: 24.01.2022 JP 2022008526
(71) Applicant: NIPPON STEEL CORPORATION, Chiyoda-ku Tokyo 100-8071 (JP)
(72) Inventor: ABE, Tatsuhiko, Tokyo 100-8071 (JP); SUEYASU, Yoko, Tokyo 100-8071 (JP)
(74) Representative: J A Kemp LLP
(86) International application number: PCT/JP2022/044132
(87) International publication number: WO 2023/139936

(57) **Abstract**

A crankshaft with improved fatigue strength and reduced quench cracking is provided. The crankshaft (10) is a crankshaft including a pin (12) and pin tops (15), the pin (12) including a sliding portion (121) having a constant outer diameter, and fillets (122) formed contagiously with the sliding portion (121), each fillet (122) including a hardened region (122a) at its surface, the hardened region being a region with a hardness higher than the hardness of the core of the sliding portion (121) by 100 HV or more, the hardened region (122a) of the fillet (122) having a thickness (d1) not smaller than 12.0 % of the radius (R) of the sliding portion (121), the pin tops (15) having a prior-austenite grain size not larger than 60 pm.

## Description

### TECHNICAL FIELD

The present invention relates to a crankshaft and a method of manufacturing the same.

### BACKGROUND ART

A crankshaft is often subjected to induction hardening to improve fatigue strength.

JP 2020-100861 A discloses an automotive mechanical part that exhibits, in an induction-hardened and tempered state, a surface hardness not lower than 600 Hv, a core hardness not lower than 350 Hv, a ratio of the hardened depth to the radius of the part in the range of 0.5 to 1.0, an average cut-surface hardness not lower than 550 Hv, and a crystal grain size number at the outermost surface not lower than 7.0.

Japanese Patent No. 6693206 B2 discloses a method of manufacturing a crankshaft that involves performing induction hardening on the pins and journals of a forged part having a predetermined chemical composition at a heating temperature not lower than the austenitization temperature and not higher than 1050 °C to form, on its outer periphery, a hardened layer with a crystal grain size not lower than No. 7.

JP 2005-60723 A discloses a crankshaft including quench-hardened layers at the surfaces of the crankpins and journals, where the prior-austenite grain size of the hardened surface layer after induction hardening is not larger than 12 pm throughout the entire hardened layer. This publication discloses forming a hardened surface layer by performing induction hardening at a heating temperature of 800 to 1000 °C, and performing induction hardening a plurality of times.

JP H5-222459 A discloses an induction hardening method including a heating step in which a cam shaft, made of a cast iron of an iron-based alloy with carbides distributed throughout the base material in an area ratio of 18 to 25 %, is set onto a fixing jig and the workpiece is heated by a high frequency of 20 kHz in two stages, i.e., preheating and main heating, and a cooling step in which the workpiece as heated is cooled in two stages, i.e., air cooling and water cooling.

JP H9-79339 A discloses a rolling element for a toroidal continuously variable transmission with improved fatigue life. This publication teaches a first stage for quenching by heating the inner diameter surface and bottom surface with an output of 80 kW and at a frequency of 30 kHz for 7 seconds and then water cooling, and a subsequent second stage for quenching by heating the roll surface with an output of 30 kW and at a frequency of 100 kHz for 20 seconds and then water cooling.

### PRIOR ART DOCUMENTS

### PATENT DOCUMENTS

Patent Document 1: JP 2020-100861 A
Patent Document 2: Japanese Patent No. 6693206 B2
Patent Document 3: JP 2005-60723 A
Patent Document 4: JP H5-222459 A
Patent Document 5: JP H9-79339 A

### SUMMARY OF THE INVENTION

### PROBLEMS TO BE SOLVED BY THE INVENTION

The fatigue strength of a part may be improved by increasing the heating time for induction hardening to form a quench-hardened layer deeper into the part. However, for a part with a complicated geometry such as a crankshaft, increasing the heating time for induction hardening may cause quench cracking.

An object of the present invention is to provide a crankshaft with improved fatigue strength and reduced quench cracking.

### MEANS FOR SOLVING THE PROBLEMS

A crankshaft according to one embodiment of the present invention is a crankshaft including a pin and a pin top, the pin including a sliding portion having a constant outer diameter, and a fillet formed contagiously with the sliding portion, the fillet including a hardened region at a surface, the hardened region being a region with a hardness higher than a hardness of a core of the sliding portion by 100 HV or more, the hardened region of the fillet having a thickness not smaller than 12.0 % of a radius of the sliding portion, the pin top having a prior-austenite grain size not larger than 60 pm.

A manufacturing method according to one embodiment of the present invention is a method of manufacturing the above-described crankshaft, including: a preheating step for heating an intermediate crankshaft product by high-frequency induction heating to a preheating temperature; and a main heating step for increasing an output of the high-frequency induction heating to heat the preheated intermediate crankshaft product to a main-heating temperature, the main-heating temperature being a temperature higher than 1000 °C, the preheating temperature being a temperature not lower than 80 % of the main-heating temperature and lower than the main-heating temperature.

### EFFECTS OF THE INVENTION

The present invention provides a crankshaft with improved fatigue strength and reduced quench cracking.

### BRIEF DESCRIPTION OF THE DRAWINGS

[FIG. 1] FIG. 1 is a schematic view of a crankshaft according to one embodiment of the present invention.
[FIG. 2] FIG. 2 is an enlarged cross-sectional view of a pin and nearby portions of the crankshaft of FIG. 1.
[FIG. 3] FIG. 3 is a flow chart illustrating a method of manufacturing a crankshaft according to one embodiment of the present invention.
[FIG. 4] FIG. 4 is a graph schematically illustrating a heat pattern for the induction hardening step.

### EMBODIMENTS FOR CARRYING OUT THE INVENTION

The present inventors investigated the causes of quench cracking of an induction-hardened crankshaft, and discovered that crankshafts that had developed quench cracks had coarsened crystal grains in pin tops. More specifically, they discovered that, if the prior-austenite grain size in the pin tops is larger than 60 pm, quench cracking tends to occur from pin tops toward the associated thrust walls.

The present inventors further discovered that coarsening of crystal grains in the pin top will be reduced by performing the heating for induction hardening in two separate stages, i.e., preheating and main heating.

The present invention was made based on these findings. Now, embodiments of the present invention will be described in detail with reference to the drawings. The same or corresponding components in the drawings are labeled with the same reference numerals, and their description will not be repeated. The size ratios of the components shown in the drawings do not necessarily represent their actual size ratios.

### [Crankshaft]

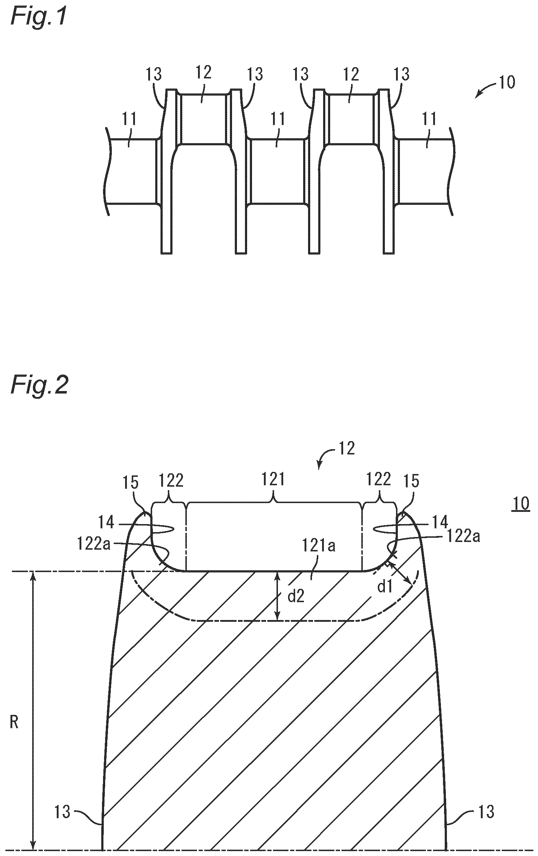

FIG. 1 is a schematic view of a crankshaft 10 according to one embodiment of the present invention. The crankshaft 10 includes journals 11, pins 12, and arms 13.

The crankshaft 10 may be made of a steel material for mechanical structures, for example. Although not limiting, the crankshaft 10 may be made of a carbon steel material for mechanical structures in accordance with JIS G 4051:2016, or an alloyed steel material for mechanical structures in accordance with JIS G 4053:2016, for example. Among such steel materials, S40C, S45C, S50C and S53C in accordance with JIS G 4051:2016 and SMn438 in accordance with JIS G 4053:2016, as well as a steel material obtained by adding up to 0.20 mass % S to such a steel material to improve its machinability are particularly preferable.

The crankshaft 10 may have a chemical composition of, for example, in mass %: 0.30 to 0.60 % C; 0.01 to 2.0 % Si; 0.1 to 2.0 % Mn; 0.01 to 0.50 % Cr; 0.001 to 0.06 % Al; 0.001 to 0.02 % N; up to 0.03 % P; up to 0.20 % S; and balance Fe and impurities.

The crankshaft 10 may have a chemical composition of, for example, in mass %: 0.30 to 0.60 % C; 0.01 to 2.0 % Si; 0.1 to 2.0 % Mn; 0.01 to 0.50 % Cr; 0.001 to 0.06 % Al; 0.001 to 0.02 % N; up to 0.03 % P; up to 0.20 % S; 0 to 0.50 % Mo; 0 to 0.50 % Cu; 0 to 0.50 % Ni; 0 to 0.050 % Ti; 0 to 0.050 % Nb; 0 to 0.005 % Ca; 0 to 0.30 % Bi; 0 to 0.20 % V; and balance Fe and impurities. In such implementations, Mo, Cu, Ni, Ti, Nb, Ca, Bi and V are optional elements. In other words, the above-specified chemical composition may not include Mo, Cu, Ni, Ti, Nb, Ca, Bi and V

The crankshaft 10 may have a chemical composition of, for example, in mass %: 0.30 to 0.60 % C; 0.01 to 2.0 % Si; 0.1 to 2.0 % Mn; 0.01 to 0.50 % Cr; 0.001 to 0.06 % Al; 0.001 to 0.02 % N; up to 0.03 % P; up to 0.20 % S; 0 to 0.50 % Cu; 0 to 0.50 % Ni; 0 to 0.050 % Ti; 0 to 0.050 % Nb; 0 to 0.005 % Ca; 0 to 0.30 % Bi; 0 to 0.20 % V; and balance Fe and impurities. In such implementations, Cu, Ni, Ti, Nb, Ca, Bi and V are optional elements. In other words, the above-specified chemical composition may not include Cu, Ni, Ti, Nb, Ca, Bi and V

In the chemical composition of the crankshaft 10, C content is more preferably 0.33 to 0.55 mass %. If C content is too low, it may be difficult to sufficiently increase the thickness of the quench-hardened layer. On the other hand, if C content is too high, quench cracking can easily occur. A lower limit of C content is yet more preferably 0.35 mass %, still more preferably 0.38 mass %, yet more preferably 0.40 mass %, and still more preferably 0.41 mass %. An upper limit of C content is yet more preferably 0.50 mass %, still more preferably 0.45 mass %, and yet more preferably 0.43 mass %.

In the chemical composition of the crankshaft 10, Si content is more preferably 0.01 to 1.0 mass %, and yet more preferably 0.01 to 0.7 mass %. In the chemical composition of the crankshaft 10, S content is still more preferably up to 0.10, and yet more preferably up to 0.07 mass %.

The journals 11 are coupled to bearings of a cylinder block (not shown). The pins 12 are coupled to bearings of connecting rods (not shown). The arms 13 connect the journals 11 and pins 12.

FIG. 2 is an enlarged cross-sectional view of a pin 12 and nearby portions of the crankshaft 10. The pin 12 includes a sliding portion 121 with a constant outer diameter, and fillets 122 formed contagiously with the sliding portion 121. For each fillet 122, a thrust wall 14 and a pin top 15 are provided outward of the fillet.

The sliding portion 121 is a portion that slides over a bearing of the connecting rod. A fillet 122 is a portion that connects the sliding portion 121 with the associated thrust wall 14 and has a smooth shape to mitigate stress concentration.

A pin top 15 is a portion located outward of the sliding portion 121 and the associated fillet 122 as determined along the axial direction and the outermost portion end of the protrusion as determined along a radial dimension.

A fillet 122 includes, at its surface, a hardened region 122a, i.e., region with a hardness higher than the hardness of the core of the sliding portion 121 by 100 HV or more. The thickness d1 of the hardened region 122a of the fillet 122 is not smaller than 12.0 % of the radius R of the sliding portion 121.

In connection with the present embodiment, "hardened region" is defined as a region with a hardness higher than the hardness of the core of the sliding portion 121 (i.e., middle portion as determined along a radial direction) by 100 HV or more. In a fillet 122 of the crankshaft 10 of the present embodiment, the thickness d1 of the hardened region 122a is not smaller than 12.0 % of the radius R of the sliding portion 121. It should be noted that "thickness of the hardened region" as used herein is different from "effective case depth" and "total case depth" as used in JIS G0559.

The fillets 122 are portions of the pin 12 that receive the strongest stress applied. If the thickness d1 of the hardened regions 122a of the fillets 122 is not smaller than 12.0 % of the radius R, this will provide good fatigue strength. A lower limit of the thickness d1 is preferably 14.0 % of the radius R, more preferably 15.0 %, yet more preferably 16.0 %, and still more preferably 18.0 %.

If a hardened region 122a has an excessive thickness, coarsening of crystal grains in the associated pin top 15 may not be prevented. An upper limit of the thickness d1 is preferably 25.0 % of the radius R, more preferably 22.0 %, and yet more preferably 20.0 %.

Preferably, the surface of the sliding portion 121 is provided with a hardened region with a predetermined thickness. More specifically, it is preferable that the sliding portion 121 includes, at is surface, a hardened region 121a, i.e., region with a hardness higher than the hardness of the core of the sliding portion 121 by 100 HV or more, where the thickness d2 of the hardened region 121a at the middle as determined along the axial direction is not smaller than 14.0 % of the radius R of the sliding portion 121.

If the thickness d1 of the hardened regions 122a of the fillets 122 is not smaller than 12.0 % of the radius R and, in addition, the thickness d2 of the hardened region 121a of the sliding portion 121 at the middle as determined along the axial direction is not smaller than 14.0 % of the radius R, this will provide good fatigue strength in a more stable manner. A lower limit of the thickness d2 is preferably 16.0 % of the radius R, more preferably 18.0 %, yet more preferably 20.0 %, and still more preferably 22.0 %.

As is the case with the hardened region 122a, if the hardened region 121a has an excessive thickness, coarsening of crystal grains in the pin tops 15 may not be prevented. An upper limit of the thickness d2 is preferably 30.0 % of the radius R, more preferably 28.0 %, and yet more preferably 26.0 %.

The hardness of the core of the pin 12 is preferably not higher than 300 HV If the hardness of the core of the pin 12 is too high, workability may decrease. The hardness of the core of the pin 12 is more preferably not higher than 290 HV, and yet more preferably not higher than 280 HV Although not limiting, a lower limit of the hardness of the core of the pin 12 may be 230 HV, for example.

The radius of the sliding portion 121 of the pin 12 is preferably not smaller than 15 mm. The radius of the sliding portion 121 of the pin 12 is more preferably not smaller than 20 mm, yet more preferably not smaller than 25 mm, still more preferably not smaller than 30 mm, yet more preferably not smaller than 35 mm, and still more preferably not smaller than 40 mm. Although not limiting, an upper limit of the radius of the sliding portion 121 of the pin 12 may be 60 mm, for example.

In the crankshaft 10 according to the present embodiment, the prior-austenite grain size in the pin tops 15 is not larger than 60 pm.

If grains of the microstructure of the pin top 15 are coarsened, quench cracking can easily occur. As the prior-austenite grain size in the pin top 15 is not larger than 60 pm, quench cracking will be prevented in a stable manner. An upper limit of the prior-austenite grain size of the pin top 15 is preferably 55 pm, more preferably 52 pm, and yet more preferably 48 pm. Although not limiting, a lower limit of the prior-austenite grain size in the pin top 15 may be 15 pm, for example.

### [Method of Manufacturing Crankshaft]

An exemplary method of manufacturing the crankshaft 10 will now be described. The manufacturing method described below is merely illustrative, and does not limit the method of manufacturing the crankshaft 10.

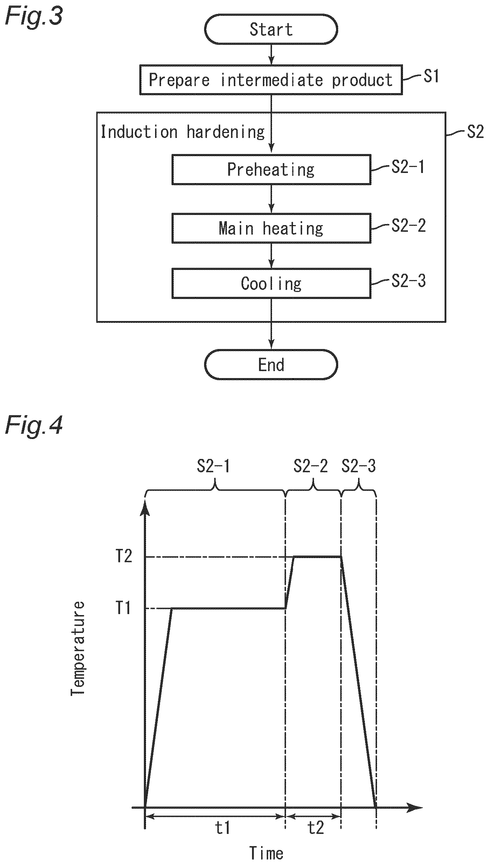

FIG. 3 is a flow chart illustrating a method of manufacturing the crankshaft of one embodiment of the present invention. The manufacturing method includes the step of preparing an intermediate product for a crankshaft (step S1) and the step of performing induction hardening on the intermediate crankshaft product (step S2).

An intermediate product for a crankshaft is prepared (step S1). The intermediate crankshaft product may be produced by, for example, hot forging a material having a predetermined chemical composition into a rough crankshaft shape, performing a heat treatment such as normalizing as necessary, and then performing machining as necessary.

The intermediate crankshaft product is subjected to induction hardening (step S2). Specifically, the intermediate crankshaft product is heated by high-frequency induction heating to a predetermined temperature and then rapidly cooled. The induction hardening of the crankshaft is usually performed on the journals 11 and pins 12.

FIG. 4 is a graph schematically illustrating a heat pattern for the induction hardening step (step S2). The induction hardening step (step S2) includes the sub-steps of preheating (step S2-1), main heating (step S2-2), and cooling (step S2-3).

In the method of manufacturing a crankshaft according to the present embodiment, the heating for the induction hardening is performed through two separate sub-steps, namely, preheating (step S2-1) and main heating (step S2-2). More specifically, the intermediate crankshaft product is heated by high-frequency induction heating to a predetermined preheating temperature, T1, and then the output for the high-frequency induction heating is increased to heat the product to a main-heating temperature, T2, which is higher than 1000 °C. The preheating temperature T1 is not lower than 80 % of the main-heating temperature T2 and lower than the main-heating temperature T2.

A prolonged heating time for the induction hardening causes quench cracking presumably because the prolonged heating time leads to excessive heating (e.g., to a temperature not lower than 1100 °C) of the pin tops 15, which have small heat capacity, causing crystal grains in the pin top 15 to coarsen. As the heating for the induction hardening is performed through separate sub-steps, i.e., preheating (step S2-1) and main heating (step S2-2), excessive heating of the pin top 15 will be prevented even if the heating temperature (i.e., main-heating temperature T2) is increased.

First, the intermediate crankshaft product is preheated by high-frequency induction heating (step S2-1).

The preheating temperature T1 is not lower than 80 % of the main-heating temperature T2 and lower than the main-heating temperature T2. The preheating temperature T1 is the surface temperature of the sliding portion 121 of the pin 12 at the middle as determined along the axial direction directly after the preheating step (step S2-1). If the preheating temperature T1 is too low, the thickness d1 of the hardened regions 122a cannot be sufficiently increased, making it impossible to obtain a target fatigue strength. In addition, the heating time would have to be prolonged in order to raise temperature to the main-heating temperature T2 during the main heating step (step S2-2), which would make it difficult to prevent coarsening of crystal grains in the pin tops 15. On the other hand, if the preheating temperature is too high, the pin tops 15 are excessively heated during the preheating step (step S2-1), making it difficult to prevent coarsening of crystal grains in the pin tops 15.

A lower limit of the preheating temperature T1 is preferably 84 % of the main-heating temperature T2, more preferably 86 %, yet more preferably 88 %, and still more preferably 90 %. The preheating temperature T1 is preferably not lower than the Ac₃ point of the steel material constituting the crankshaft. A lower limit of the preheating temperature T1 is more preferably 900 °C, yet more preferably 920 °C, and still more preferably 940 °C. An upper limit of the preheating temperature T1 is preferably 95 % of the main-heating temperature T2, and more preferably 92 %.

The heating time for the preheating step (step S2-1) (hereinafter referred to as "preheating time t1") is preferably not shorter than 10 seconds. If the preheating temperature time t1 is too short, the heating rate must be increased to raise temperature to the preheating temperature T1, which makes temperature control difficult. A lower limit of the preheating time t1 is preferably 15 seconds, more preferably 20 seconds, and yet more preferably 22 seconds. An upper limit of the preheating time t1 is preferably 40 seconds, and more preferably 35 seconds.

The preheated intermediate crankshaft product is subjected to main heating by increasing the output for the high-frequency induction heating (step S2-2). The main heating step (step S2-2) is preferably performed directly after the preheating step (step S2-1). More specifically, it is performed preferably within 10 seconds after completion of the preheating step (step S2-1), more preferably within 5 seconds, and yet more preferably within 1 second. Further, it is preferably performed before the surface temperature of the sliding portion 121 of the pin 12 at the middle as determined along the axial direction decreases 100 °C from the preheating temperature T1, more preferably before it decreases 50 °C, and most preferably before temperature starts to decrease.

The main-heating temperature T2 is higher than 1000 °C. The main-heating temperature T2 is the surface temperature of the sliding portion 121 of the pin 12 at the middle as determined along the axial direction directly after the main heating step (step S2-2). If the main-heating temperature T2 is not higher than 1000 °C, the thickness d1 of the hardened region 122a cannot be sufficiently increased, which makes it impossible to obtain a target fatigue strength. A lower limit of the main-heating temperature T2 is preferably 1020 °C, more preferably 1030 °C, and yet more preferably 1040 °C. On the other hand, an excessively high main-heating temperature T2 makes it difficult to prevent coarsening of crystal grains in the pin tops 15. An upper limit of the main-heating temperature T2 is preferably 1090 °C, more preferably 1080 °C, and yet more preferably 1060 °C.

The heating time for the main heating step (step S2-2) (hereinafter referred to as "main-heating time t2") is preferably not longer than 15 seconds. An excessively long main-heating time t2 makes it difficult to prevent coarsening of crystal grains in the pin tops 15. An upper limit of the main-heating time t2 is preferably 12 seconds. A lower limit of the main-heating time t2 is preferably 2 seconds, more preferably 5 seconds, and yet more preferably 8 seconds.

The intermediate crankshaft product heated to the main-heating temperature T2 is rapidly cooled (step S2-3). The rapid cooling is preferably water cooling. The cooling step (step S2-3) is preferably performed directly after the main heating step (step S2-2). More specifically, it is performed preferably within 10 seconds after completion of the main heating step (step S2-2), more preferably within 5 seconds, and yet more preferably within 1 second.

The cooled crankshaft may be tempered as necessary.

The intermediate crankshaft product that has undergone induction hardening (or induction hardening plus tempering) may be subjected to a finishing treatment as necessary. For example, the journals 11 and pins 12 may be ground or lapped to trim the surface geometry. This results in a crankshaft.

A crankshaft according to one embodiment of the present invention and an exemplary method of manufacturing the same have been described. The present embodiment provides a crankshaft with improved fatigue strength and reduced quench cracking.

### EXAMPLES

Now, the present invention will be described more specifically by means of examples. The present invention is not limited to these examples.

Intermediate crankshaft products were prepared from a steel material having the chemical composition shown in Table 1, and each of them was subjected to induction hardening under the relevant conditions shown in Table 2. After the induction hardening, the pins and journals were ground to produce a crankshaft. The radius of the sliding portions of the pins was 43 mm.

### [Table 1]

**TABLE 1**

| Chemical composition (in mass %, balance Fe and impurities) | | | | | | | |
|---|---|---|---|---|---|---|---|
| C | Si | Mn | P | S | Cr | Al | N |
| 0.43 | 0.6 | 1.35 | 0.015 | 0.02 | 0.15 | 0.02 | 0.015 |

### [Table 2]

**TABLE 2**

| No. | t1 (s) | T1 (°C) | t2 (s) | T2 (°C) | Classification |
|---|---|---|---|---|---|
| 0 | - | - | 20 | 928 | reference |
| 1 | 24 | 942 | 10 | 1028 | inv. ex. |
| 2 | 24 | 942 | 12 | 1067 | inv. ex. |
| 3 | 24 | 971 | 10 | 1045 | inv. ex. |
| 4 | 30 | 960 | 10 | 1081 | inv. ex. |
| 5 | 24 | 840 | 10 | 1034 | inv. ex. |
| 6 | 12 | 840 | 10 | 920 | comp. ex. |
| 7 | 24 | 826 | 10 | 900 | comp. ex. |
| 8 | 36 | 841 | 10 | 921 | comp. ex. |
| 9 | 24 | 826 | 10 | 930 | comp. ex. |
| 10 | - | - | 20 | 1012 | comp. ex. |
| 11 | - | - | 20 | 1095 | comp. ex. |
| 12 | - | - | 35 | 1080 | comp. ex. |
| 13 | - | - | 40 | 1035 | comp. ex. |

"t1" in Table 2 indicates the heating time for the preheating step, "T1"indicates the surface temperature of the sliding portion at the middle along the axial direction directly after the preheating step, "t2" indicates the heating time for the main heating step, and "T2" indicates the surface temperature of the sliding portion at the middle along the axial direction directly after the main heating step. For crankshaft Nos. 0 and 10 to 13, preheating was not performed during induction hardening.

A test specimen for hardness measurement was taken from each crankshaft, and the ratio of the thickness of the hardened regions of the fillets to the radius of the sliding portion (d1/R), as well as the ratio of the thickness of the hardened region of the sliding portion at the middle along the axial direction to the radius of the sliding portion (d2/R), were measured. The thickness of the hardened region of a fillet was measured along a direction perpendicular to the surface of a bottom portion of the fillet (specifically, portion where a tangent thereto and the axial direction form an angle of 45°).

Further, a micro-Vickers measurement instrument was used to press a load of 300 gf down against a middle portion of the sliding portion along the axial direction at positions of 0.2 mm, 0.4 mm, 0.6 mm, 0.8 mm and 1.0 mm from the surface, and the average of the obtained Vickers hardnesses was treated as the "hardened layer hardness". The hardness of the core of the sliding portion was treated as the "base material hardness".

The prior-austenite grain size (prior-γ grain size) in the pin tops was measured. Specifically, a specimen was cut out of a pin top such that a cut surface as in the cross section of FIG. 2 (i.e., cross section parallel to the axis of the sliding portion 121) would serve as the observation surface and was polished, and immersed for approximately 10 minutes in a 50 °C warm bath filled with an etching reagent based on a saturated aqueous solution of picric acid. The specimen was then neutralized with a 1 % aqueous NaOH solution, water washed and dried, and the prior-γ grains were rendered visible. The specimen was photographed under an optical microscope, and the number of prior-γ grains inside a 250 µm × 250 µm field of view with a center located at a depth of 5 mm from the surface of the pin top was counted. Finally, the area of the field of view was divided by the number of grains to obtain the area per grain, and the diameter of a grain was calculated assuming that the grain had the shape of a perfect circle.

For each of the crankshafts in which the prior-austenite grain size in the pin top was not larger than 60 pm, one throw was cut out and subjected to torsional fatigue testing. Specifically, the journals at both ends of one throw were fixed to the testing machine, and a predetermined torque was repeatedly applied to the journals to repeatedly apply a shear force to the pin. The test was continued until a fatigue failure was observed or the number of repetitions reached 1.0 × 10⁷.

The results are shown in Table 3. The torsional fatigue strength (i.e., fatigue limit) is a value relative to No. 0.

### [Table 3]

**TABLE 3**

| No. | d1/R. | d2/R | Hardened layer hardness (HV) | Base material hardness (HV) | Torsional fatigue strength | Prior-y grain diameter in pin tops (µm) | Classification |
|---|---|---|---|---|---|---|---|
| 0 | 10.0% | 13.7% | 641 | 270 | reference | 21 | reference |
| 1 | 17.4% | 22.1% | 643 | 265 | 12% | 42 | inv. ex. |
| 2 | 18.8% | 24.4% | 644 | 265 | 16% | 45 | inv. ex. |
| 3 | 18.1% | 24.1% | 649 | 262 | 16% | 45 | inv. ex. |
| 4 | 19.0% | 24.8% | 651 | 264 | 17% | 50 | inv. ex. |
| 5 | 13.4% | 19.5% | 640 | 266 | 8% | 40 | inv. ex. |
| 6 | 9.8% | 10.1% | 625 | 263 | -2% | 18 | comp. ex. |
| 7 | 7.5% | 9.7% | 631 | 270 | -25% | 18 | comp. ex. |
| 8 | 8.7% | 10.5% | 641 | 256 | -13% | 20 | comp. ex. |
| 9 | 9.6% | 11.0% | 639 | 271 | -4% | 19 | comp. ex. |
| 1.0 | 12.2% | 14.8% | 640 | 270 | - | 61 | comp. ex. |
| 11 | 16.5% | 20.2% | 640 | 274 | - | 68 | comp. ex. |
| 12 | 18.6% | 25.5% | 638 | 268 | - | 68 | comp. ex. |
| 13 | 17.6% | 23.4% | 642 | 267 | - | 64 | comp. ex. |

As shown in Table 3, each of crankshaft Nos. 1 to 5 had a significantly improved torsional fatigue strength compared with crankshaft No. 0. Particularly, crankshaft Nos. 1 to 4, where d1/R was not lower than 15.0 %, each exhibited an improvement in torsional fatigue strength not less than 10 % over crankshaft No. 0.

Crankshaft Nos. 6 to 9 did not show a significant difference in fatigue strength from crankshaft No. 0, or had an inferior torsional fatigue strength to crankshaft No. 0. This is presumably because the thickness of the hardened regions of the fillets was substantially equal to, or smaller than, that for crankshaft No. 0. The thickness of the hardened regions of the fillets was insufficient presumably because the main-heating temperature was not higher than 1000 °C.

For each of crankshaft Nos. 10 to 13, the prior-austenite grain size of the pin top was larger than 60 pm. This is presumably because the preheating step was not performed.

Although one embodiment of the present invention has been described, the above-described embodiment is merely an illustrative example useful for carrying out the present invention. Thus, the present invention is not limited to the above-described embodiment, and the above-described embodiment, when carried out, may be modified as appropriate within the scope of the invention.

### REFERENCE SIGNS LIST

- 10:: crankshaft
- 11:: journals
- 12:: pins
- 121:: sliding portion
- 121a:: hardened region
- 122:: fillets
- 122a:: hardened regions
- 13:: arms
- 14:: thrust walls
- 15:: pin tops

## Claims

1. A crankshaft including a pin and a pin top,
the pin including a sliding portion having a constant outer diameter, and a fillet formed contagiously with the sliding portion,
the fillet including a hardened region at a surface, the hardened region being a region with a hardness higher than a hardness of a core of the sliding portion by 100 HV or more,
the hardened region of the fillet having a thickness not smaller than 12.0 % of a radius of the sliding portion,
the pin top having a prior-austenite grain size not larger than 60 pm.

2. The crankshaft according to claim 1, having a chemical composition of, in mass %:
0.30 to 0.60 % C;
0.01 to 2.0 % Si;
0.1 to 2.0 % Mn;
0.01 to 0.50 % Cr;
0.001 to 0.06 % Al;
0.001 to 0.02 % N;
up to 0.03 % P;
up to 0.20 % S; and
balance Fe and impurities.

3. The crankshaft according to claim 1, having a chemical composition of, in mass %:
0.30 to 0.60 % C;
0.01 to 2.0 % Si;
0.1 to 2.0 % Mn;
0.01 to 0.50 % Cr;
0.001 to 0.06 % Al;
0.001 to 0.02 % N;
up to 0.03 % P;
up to 0.20 % S;
0 to 0.50 % Mo;
0 to 0.50 % Cu;
0 to 0.50 % Ni;
0 to 0.050 % Ti;
0 to 0.050 % Nb;
0 to 0.005 % Ca;
0 to 0.30 % Bi;
0 to 0.20 % V; and
balance Fe and impurities.

4. The crankshaft according to claim 1, having a chemical composition of, in mass %:
0.30 to 0.60 % C;
0.01 to 2.0 % Si;
0.1 to 2.0 % Mn;
0.01 to 0.50 % Cr;
0.001 to 0.06 % Al;
0.001 to 0.02 % N;
up to 0.03 % P;
up to 0.20 % S;
0 to 0.50 % Cu;
0 to 0.50 % Ni;
0 to 0.050 % Ti;
0 to 0.050 % Nb;
0 to 0.005 % Ca;
0 to 0.30 % Bi;
0 to 0.20 % V; and
balance Fe and impurities.

5. The crankshaft according to any one of claims 2 to 4, wherein C content is 0.40 to 0.50 mass %.

6. The crankshaft according to any one of claims 1 to 4, wherein:
the sliding portion includes a hardened region at a surface, the hardened region being a region with a hardness higher than the hardness of the core of the sliding portion by 100 HV or more; and
a thickness of the hardened region of the sliding portion at a middle as determined along an axial direction is not smaller than 14.0 % of the radius of the sliding portion.

7. The crankshaft according to any one of claims 1 to 4, wherein the hardness of the core of the sliding portion is not higher than 300 HV

8. The crankshaft according to any one of claims 1 to 4, wherein a radius of the pin is not smaller than 15 mm.

9. A method of manufacturing the crankshaft according to any one of claims 1 to 4, comprising:
a preheating step for heating an intermediate crankshaft product by high-frequency induction heating to a preheating temperature; and
a main heating step for increasing an output of the high-frequency induction heating to heat the preheated intermediate crankshaft product to a main-heating temperature, the main-heating temperature being a temperature higher than 1000 °C,
the preheating temperature being a temperature not lower than 80 % of the main-heating temperature and lower than the main-heating temperature.

10. The manufacturing method according to claim 9, wherein a heating time for the preheating step is not shorter than 10 seconds.

11. The manufacturing method according to claim 9, wherein a heating time for the main heating step is not longer than 15 seconds.
